# EUROPÄISCHE PATENTANMELDUNG

(11) **EP 1 884 692 A1**
(43) Veröffentlichungstag der Anmeldung: **06.02.2008**
(21) Anmeldenummer: 07113350.8
(22) Anmeldetag: 27.07.2007
(51) Int. Cl.: F16K 11/07

(54) **Pneumatikventil mit schneller Rückstellung**

(30) Priorität: 29.07.2006 DE 102006035175
(71) Anmelder: Bosch Rexroth AG, 71701 Schwieberdingen (DE)
(72) Erfinder: Pegaz, Frederic, 74240 Gaillard (FR)
(74) Vertreter: Kietzmann, Lutz

(57) **Zusammenfassung**

Schieberventil (1) mit einem Gehäuse (2), welches zumindest zwei Fluidanschlüsse aufweist und einen Ventilschieber (3) mit einem endseitigen Steuerkolben (4) zum Schalten des Druckmittelflusses der Fluidanschlüsse axial beweglich aufnimmt, wobei der Steuerkolben (4) an eine Steuerdruckkammer (5) angrenzt, und der Ventilschieber (3) mittels einer Druckbeaufschlagung der Steuerdruckkammer (5) in eine Öffnungsstellung bewegbar ist, wobei der Steuerkolben (4) relativ zum Ventilschieber (3) axial beweglich angeordnet ist und über die der Steuerdruckkammer (5) gegenüberliegenden Kolbenseite fluidisch beaufschlagbar ist, sodass der Steuerkolben (4) bei Druckentlastung der Steuerdruckkammer (5) in eine Schließstellung gegenüber dem Ventilschieber (3) voreilt. Somit wird ein Schieberventil (1) mit einem Ventilschieber (3) geschaffen, welches eine einfache Konstruktion aufweist und ferner ein schnelles Schalten des Druckmitteltlusses mittels eines beschleunigt bewegten Ventilschiebers (3) ermöglicht.

## Beschreibung

Die vorliegende Erfindung betrifft ein Schieberventil mit einem Gehäuse, welches zumindest zwei Fluidanschlüsse aufweist und einen Ventilschieber mit einem endseitigen Steuerkolben zum Schalten des Druckmittelflusses der Fluidanschlüsse axial beweglich aufnimmt, wobei der Steuerkolben an eine Steuerdruckkammer angrenzt, und der Ventilschieber mittels der Druckbeaufschlagung der Steuerdruckkammer in eine Öffnungsstellung bewegbar ist.

Derartige Schieberventile schalten den Druckmittelfluss zwischen den Fluidanschlüssen durch ein Hin- und Herbewegen des Ventilschiebers. Dieser weist mehrere Nuten auf, welche in Abhängigkeit der axialen Schaltstellung des Ventilschiebers den Druckmittelfluss zwischen den Fluidanschlüssen entweder sperren oder freigeben. Die Fluidanschlüsse umfassen dabei zumeist ein Speisedruckanschluss sowie einen Arbeitsanschluss, wobei ferner ein Entlüftungsanschluss vorgesehen sein kann. In Abhängigkeit von der Anzahl der Fluidanschlüsse werden im Wesentlichen das 3/2-Wegeventil und das 5/2-Wegeventil voneinander unterschieden.

Aus der Patentschrift DE 100 14 435 B4 ist ein Mehrwegeventil zum Schalten eines Druckmittelflusses bekannt. Dieses besteht aus einem Ventilgehäuse mit mehreren Fluidanschlüssen für Druckmittel, die mit einer Ventilbohrung verbunden sind, in der ein Ventilschieber zum Schalten des Druckmittelflusses zwischen den Fluidanschlüssen gleitend aufgenommen ist. Mittels Verschlusskappen ist die Ventilbohrung zu beiden Enden verschlossen, wobei zumindest ein Kolben zur axialen Bewegung des Ventilschiebers in eine gewünschte Schaltposition bewegbar ist. Dieser korrespondiert mit einer Steuerkammer, welcher in der Ventilbohrung ausgebildet ist und die mit einem Steuerdruck beaufschlagbar ist, um den Kolben zu bewegen. Ferner ist eine Rückstellfeder zum Rückstellen des Ventilschiebers in seine Normalposition bei entlüfteter Steuerkammer vorgesehen.

Bei derartigen Schieberventilen weist der Ventilschieber eine Vielzahl von Dichtelementen auf, um im entsprechenden Sitz innerhalb des Gehäuses die zwischen den Sitzen ausgebildeten Fluidbohrungen fluidisch gegeneinander abzudichten. Ferner weist der Steuerkolben, welcher normalerweise endseitig am Ventilschieber entweder einteilig ausgebildet ist oder form- bzw. stoff- oder kraftschlüssig mit diesem verbunden ist, ein Kolbendichtelement auf, um den Steuerkolben gegen die Steuerdruckkammer dynamisch abzudichten. Aufgrund des großen Durchmessers des Kolbendichtelements bewirkt dieses insbesondere bei längeren Stillstandszeiten des Ventilschiebers innerhalb des Schieberventils eine hohe Haftreibung, welche überwunden werden muss, um den Ventilschieber in die andere Schaltstellung zu bewegen.

Bei monostabil ausgeführten Ventilschiebern wird die Schaltbewegung von einer Schließstellung in eine Offenstellung durch die Druckbeaufschlagung einer Steuerdruckkammer ermöglicht, wohingegen die Rückstellung von einer Öffnungsstellung in eine Schließstellung mittels eines Druckfederelements bewirkt wird. Das Druckfederelement muss dabei die Reibung sämtlicher Dichtelemente des Ventilschiebers innerhalb des Gehäuses überwinden. Insbesondere bei langen Stillstandszeiten des Ventilschiebers in einer Offenstellung können sich die Dichtelemente am Ventilschieber festsetzen und einen Klebeeffekt aufweisen. Die Haftreibung, welche durch den Klebeeffekt hervorgerufen wird, muss vom Druckfederelement überwunden werden, um den Ventilschieber in die Schließposition zurückzustellen.

Aufgrund der hohen Reibung der Dichtelemente und insbesondere des Kolbendichtelements, tritt das Problem auf, dass die Schaltzeiten des Ventilschiebers von der Öffnungsstellung in die Schließstellung eine lange Zeitdauer beanspruchen. Durch eine schwache Auslegung der Federrate des Druckfederelements wird das Ziel verfolgt, die Schaltzeiten von der Schließstellung in die Öffnungsstellung zu minimieren, so dass eine weitere Verstärkung der Federrate des Druckfederelements eine zufriedenstellende Lösung darstellt. Eine Druckluftunterstützung, welche den Ventilschieber in Richtung der Schließbewegung Druckluft beaufschlagt, bedeutet einen erheblichen konstruktiven Aufwand, da das Vorsteuerventil zur Schaltung der Druckluft verbunden werden muss. Dabei könnte zwar das Druckfederelement entfallen, jedoch kann das Schieberventil nicht mehr als monostabiles Schieberventil ausgeführt werden.

Es ist daher die Aufgabe der vorliegenden Erfindung, ein Schieberventil mit einem Ventilschieber zu schaffen, welches eine einfache Konstruktion aufweist und ferner ein schnelles Schalten des Druckmittelflusses mittels eines beschleunigt bewegten Ventilschiebers ermöglicht.

Diese Aufgabe wird ausgehend von einem Schieberventil gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass der Steuerkolben relativ zum Ventilschieber axial beweglich angeordnet ist und über die der Steuerdruckkammer gegenüberliegenden Kolbenseite fluidisch beaufschlagbar ist, so dass der Steuerkolben bei Druckentlastung der Steuerdruckkammer in eine Schließstellung gegenüber dem Ventilschieber voreilt.

Diese Lösung bietet den Vorteil, dass die Rückstellbewegung des Steuerkolbens von der Öffnungsstellung in die Schließstellung durch den Fluiddruck unterstützt wird, welcher an zumindest einem der Fluidanschlüsse anliegt. Die Rückstellbewegung des Ventilschiebers wird somit nicht ausschließlich durch das Druckfederelement bewirkt, sondern fluidisch unterstützt. Die fluidische Unterstützung gelingt durch eine Druckaufschlagung des Steuerkolbens von der Seite des Steuerkolbens, welcher der Steuerdruckkammer gegenüber gelegen ist. Wird nunmehr die Steuerdruckkammer druckentlastet, so entfällt die Gegenkraft auf den Steuerkolben. Aufgrund der anliegenden Druckbeaufschlagung auf den Steuerkolben von der gegenüberliegenden Seite der Steuerdruckkammer wird der Steuerkolben zunächst in Richtung der Schließstellung in Bewegung gesetzt. Damit wird die Reibung des Kolbendichtelements am Steuerkolben gegenüber der Steuerdruckkammer überwunden, so dass der Steuerkolben in Bewegung gesetzt wird. Aufgrund der großen Reibung, welche durch das Kolbendichtelement verursacht wird, entfällt diese Kraftkomponente, welche nun nicht weiter vom Druckfederelement überwunden werden muss, so dass das Druckfederelement nach dem Einleiten der Rückstellbewegung des Steuerkolbens den Ventilschieber ebenfalls in die Schließstellung bewegt. Der Fluiddruck, welcher die der Steuerdruckkammer gegenüberliegende Kolbenseite beaufschlagt, liegt auch während der Öffnungsstellung permanent an, jedoch ist die resultierende Kraft durch die Druckbeaufschlagung in der Steuerdruckkammer größer als die Druckbeaufschlagung auf der gegenüberliegenden Seite des Steuerkolbens.

Vorteilhafterweise weist der Ventilschieber einen Druckkanal auf, welcher den wenigstens einen Fluidanschluss mit der der Steuerdruckkammer gegenüberliegenden Seite des Steuerkolbens verbindet. Der Steuerkolben umfasst dabei einen Führungsabschnitt, welcher in einer Führungsbohrung des Ventilschiebers axial geführt ist. Die Druckbeaufschlagung der der Steuerkammer gegenüberliegenden Seite des Steuerkolbens erfolgt dabei über die Stirnseite des Führungsabschnittes des Steuerkolbens. Der Führungsabschnitt des Steuerkolbens ragt in die Führungsbohrung des Ventilschiebers hinein und ist in diesem axial geführt.

Der Druckkanal des Ventilschiebers verläuft koaxial zur Symmetrieachse im Ventilschieber und mündet stirnseitig in der Führungsbohrung. Somit wird der Führungsabschnitt, welcher in die Führungsbohrung hineingefügt ist, durch eine Druckbeaufschlagung durch den Druckkanal seitens der Stirnseite des Führungsabschnittes Druck beaufschlagt. Damit ist die effektive druckbeaufschlagte Fläche des Steuerkolbens auf die Stirnseite des Führungsabschnittes begrenzt. Somit setzt sich der Steuerkolben erst dann in Richtung der Schließstellung in Bewegung, wenn die Steuerdruckkammer druckentlastet wird, da erst dann die resultierende Kraft der Druckbeaufschlagung der Stirnseite größer ist als die Druckbeauschlagung der die Steuerdruckkammer begrenzenden Seite des Steuerkolbens. Somit setzt sich der Steuerkolben in Richtung der Schließstellung in Bewegung und löst sich von der Endseite des Ventilschiebers, so dass dieser durch das Druckfederelement schneller in Richtung der Schließstellung bewegbar ist.

Gemäß eines weiteren Ausführungsbeispiels der Erfindung ist vorgesehen, dass ein Druckfederelement zwischen dem Gehäuse und dem Ventilschieber angeordnet ist, mittels dessen der Ventilschieber in die Schließstellung bringbar ist. Die Anordnung des Druckfederelements kann sowohl steuerkolbenseitig als auch endseitig am Ventilschieber krafteinleitend angebracht sein. Somit besteht die Möglichkeit, das Druckfederelement entweder als Druckspiralfeder koaxial mit dem Ventilschieber anzuordnen, oder ein alternatives Federelement vorzusehen, welches endseitig am Ventilschieber angeordnet ist. Das Druckfederelement bewirkt ein monostabiles Verhalten des Ventilschiebers, so dass dieser bei Druckentlastung der Steuerdruckkammer in der Schließstellung verbleibt. Daher kann das Druckfederelement auch als Blattfeder, als Tellerfeder oder als sonstiges Federelement ausgebildet sein, wobei sich insbesondere eine Spiralfederanordnung anbietet, welche den Ventilschieber über einen an den Steuerkolben angrenzenden Bund am steuerkammerseitigen Ende des Ventilschiebers kraftbeaufschlagt.

Gemäß eines weiteren Ausführungsbeispiels der Erfindung weist der Steuerkolben ein Kolbendichtelement auf, mittels welchem der Steuerkolben gegenüber der Steuerdruckkammer dynamisch abdichtet. Das Kolbendichtelement kann ein O-Ring umfassen, wobei weiterhin eine Lippendichtung mit entsprechender radialer Beaufschlagung des aktiven Dichtelements eine vorteilhafte Ausführung darstellt. Ferner weist der Steuerkolben weitere an die jeweiligen Fluidbohrungen angrenzende Dichtelemente auf, welche ebenfalls als O-Ring-Dichtung oder als Lippendichtung ausgebildet sein können.

Gemäß eines weiteren Ausführungsbeispiels ist das Schieberventil ein 3/2-Wegeventil oder ein 5/2-Wegeventil, wobei die Fluidanschlüsse wenigstens einen Speisedruckanschluss und wenigstens einen Arbeitsanschluss umfassen. Das Schieberventil kann im Allgemeinen als Mehrwegeventil ausgebildet sein, wobei mittels des Ventilschiebers zumindest zwischen zwei Fluidanschlüssen eine Schaltung des Druckmittelflusses erfolgt. Das Schalten umfasst dabei ein Trennen bzw. Schließen des Druckmittelflusses sowie ein Öffnen des Druckmittelflusses. Ferner kann der Ventilschieber neben der Schließstellung und der Offenstellung mehr als zwei Schaltstellungen einnehmen, wobei für jede Schaltstellung der Druckmittelfluss an einen jeweiligen Druckmittelanschluss freigegeben bzw. gesperrt wird.

Zur Bereitstellung des Fluiddrucks zur Druckbeauschlagung der Stirnseite des Führungsabschnittes ist die Führungsbohrung innerhalb des Ventilschiebers über einen Druckkanal mit dem Speisedruckanschluss fluidisch verbunden. Die fluidische Verbindung der Führungsbohrung innerhalb des Ventilschiebers mit dem Speisedruckanschluss über den Druckkanal bietet den Vorteil, dass der Speisedruckanschluss regulär immer einen Vordruck aufweist, welcher großer genug ist, um den Steuerkolben entsprechend zu verschieben. Ebenso besteht die Möglichkeit, die Führungsbohrung mit einem der Arbeitsanschlüsse zu verbinden, sofern grundsätzlich sichergestellt ist, dass am Arbeitsanschluss immer ein hinreichender Vordruck des Druckmittels anliegt.

Die vorliegende Erfindung betrifft ferner ein Verfahren zur Rückstellung eines Ventilschiebers in einem Schieberventil, wobei das Verfahren die Schritte des Entlüftens der Steuerdruckkammer, das Druckbeaufschlagen der der Steuerdruckkammer gegenüberliegenden Seite des Steuerkolbens, das Rückstellen des Steuerkolbens in Richtung der Schließstellung des Ventilschiebers durch die Druckbeauschlagung sowie das Rückstellen des Ventilschiebers durch ein Druckfederelement umfasst. Das Verfahren kann dabei zunächst auch das Überführen des Steuerkolbens sowie des Ventilschiebers von der Schließstellung in die Öffnungsstellung umfassen, wobei bei der Bewegung des Steuerkolbens sowie des Ventilschiebers von der Schließstellung in die Öffnungsstellung der Steuerkolben am Ventilschieberende plan anliegt. Dabei schiebt der axial gegen den Ventilschieber bewegliche Steuerkolben den Ventilschieber in die Öffnungsstellung, was durch eine Druckbeauschlagung der Steuerdruckkammer erfolgt. Zugleich wird das Druckfederelement komprimiert. Erst nach Entlüften der Steuerdruckkammer erfolgt die Rückstellung des Steuerkolbens in die Schließstellung, wobei die Druckbeauschlagung der der Steuerdruckkammer gegenüberliegenden Seite des Steuerkolbens auch während der Öffnungsstellung aufrechterhalten bleibt.

Gemäß eines weiteren Ausführungsbeispiels der Erfindung ist vorgesehen, dass die der Steuerdruckkammer gegenüberliegende Seite des Steuerkolbens durch einen Druckkanal im Ventilschieber mit dem Fluiddruck aus dem Speisedruckanschluss beaufschlagt wird. Der Steuerkolben weist dabei einen Führungsabschnitt mit einer Stirnseite auf, und der Führungsabschnitt wird in einer Führungsbohrung des Ventilschiebers axial geführt. Dabei wird die Stirnseite des Führungsabschnitts zur Erzeugung der Rückstellbewegung mit dem Fluiddruck aus dem Speisedruckanschluss druckbeaufschlagt. Innerhalb der Führungsbohrung im Ventilschieber ist ein weiteres Dichtelement angeordnet, welches zugleich als Dämpfungselement dient, wenn der Führungsabschnitt des Steuerkolbens vollständig in die Führungsbohrung des Ventilschiebers eintaucht. Die Verbindung des Druckkanals mit dem wenigstens einen Fluidanschluss, insbesondere mit dem Speisedruckanschluss, erfolgt durch wenigstens eine Querbohrung innerhalb des Ventilschiebers, wobei die Querbohrung senkrecht zum Druckkanal verläuft.

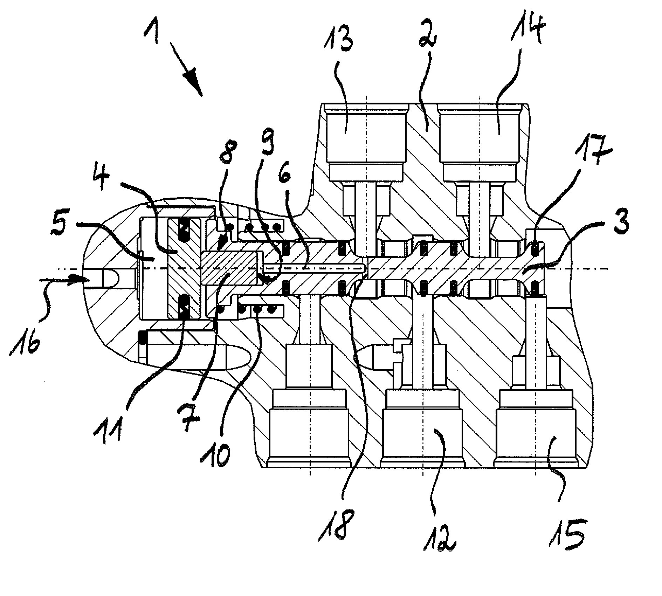

Weitere, die Erfindung verbessernde Maßnahmen sind in den Unteransprüchen angegeben oder werden nachstehend gemeinsam mit der Beschreibung eines bevorzugten Ausführungsbeispiels der Erfindung anhand der einzigen Figur näher dargestellt. Es zeigt die:
- Figur: eine quergeschnittene Ansicht eines Schieberventils mit einem in einem Gehäuse axial beweglichen Ventilschiebers sowie einem Steuerkolben gemäß der vorliegenden Erfindung.

Das in der Figur gezeigte Schieberventil 1 weist ein Gehäuse 2 auf, in welchem ein Ventilschieber 3 axial beweglich geführt ist. Der Ventilschieber 3 umfasst einen endseitig an diesem angeordneten Steuerkolben 4, welcher an eine Steuerdruckkammer 5 angrenzt. Der Ventilschieber 3 weist mehrere Abschnitte auf, welche verschiedene Durchmesser umfassen. Mittels der verschiedenen Durchmesser ist in Abhängigkeit der axialen Position des Ventilschiebers ein Druckmittelfluss schaltbar, welcher zwischen den verschiedenen Anschlüssen herrscht. Gemäß der Darstellung in der vorliegenden Figur umfasst das Schieberventil 1 einen Speisedruckanschluss 12, einen ersten Arbeitsanschluss 13 sowie einen zweiten Arbeitsanschluss 14, wobei ein mit dem ersten Arbeitsanschluss 13 verbundenes Aggregat über den Arbeitsanschluss 14 entlüftbar ist, wenn der Ventilschieber 3 den Arbeitanschluss 14 mit dem Entlüftungsanschluss 15 in der Schließstellung verbindet.

Das Schieberventil 1 ist in der vorliegenden Figur in einer Öffnungsstellung gezeigt, so dass der Speisedruckanschluss 12 mit dem Arbeitsanschluss 13 fluidisch verbunden ist. Weiterhin ist der Arbeitsanschluss 14 mit dem Entlüftungsanschluss 15 fluidisch verbunden, so dass beispielsweise ein Druckmittelzylinder druckbeaufschlagt wird und eine Ausfahrbewegung ausführen kann.

Linksseitig vom Ventilschieber 3 ist ein -nicht näher gezeigtes- Vorsteuerventil vorgesehen, welches über einen Vorsteuerventilanschluss 16 die Steuerdruckkammer 15 druckbeaufschlagen kann. Wenn die Steuerdruckkammer 5 druckbeaufschlagt ist, so wird der Steuerkolben 4 gegen die in axialer Richtung vorgesehene linke Begrenzungsfläche des Ventilschiebers 3 gedrückt, so dass der Steuerkolben 4 gemeinsam mit dem Ventilschieber 3 von einer Schließstellung in eine Öffnungsstellung nach rechts bewegt wird. Sobald der Ventilschieber 3 sowie der Steuerkolben 4 nach rechts bewegt wird, wird ein Druckfederelement 10 komprimiert. Die Bewegung des Ventilschiebers 3 wird erst durch einen Anschlag begrenzt, der im Gehäuse 2 ausgebildet ist und ein am Ventilschieber 3 angeformter Kragen, der gegen das Gehäuse anstößt. Dabei ist der Führungsabschnitt 7 des Steuerkolbens 4 vollständig in der Führungsbohrung 8 eingetaucht.

Der Steuerkolben 4 weist einen größeren Durchmesser auf als der Führungsabschnitt 7 der innerhalb der Führungsbohrung 8 im Ventilschieber 3 axial beweglich geführt ist. Aufgrund der festen Anordnung des Führungsabschnittes 7 am Steuerkolben 4 ist dieser selbst ebenfalls vor einem Verkippen oder Verkanten gesichert, da der Steuerkolben 4 über den Führungsabschnitt 7 ebenfalls geführt ist. Gemäß der Darstellung in der vorliegenden Figur sind der Führungsabschnitt 7 sowie der Steuerkolben 4 als jeweils separates Bauteil ausgeführt, wobei diese beiden Komponenten auch einteilig ausgeführt sein können.

Der Steuerkolben 4 umfasst in der zylindrischen Mantelfläche eine Nut, in welcher ein Kolbendichtelement 11 eingebracht ist, das als Lippendichtung ausgeführt ist. Mittels des Kolbendichtelements 11 wird der Steuerkolben 4 innerhalb der Steuerdruckkammer 5 dynamisch abgedichtet. Ferner umfasst der Ventilschieber 3 mehrere Schieberdichtungen 17, welche den jeweiligen Fluidabschnitt innerhalb des Ventilschiebers 3 gegenüber einem benachbarten Fluidabschnitt abdichten. Der Fluidabschnitt, welcher mit dem Speisedruckanschluss beaufschlagt ist, weist eine Querbohrung 18 auf, welche den betreffenden Fluidabschnitt des Ventilschiebers 3 mit dem Druckkanal 6 fluidisch verbindet. Der Druckkanal 6 ist konzentrisch mit der Symmetrieachse des Ventilschiebers 3 ausgebildet und erstreckt sich über einem Abschnitt des Ventilschiebers 3 bis zur Führungsbohrung 8 und verbindet die Führungsbohrung 8 fluidisch über die Querbohrung 18 mit dem Fluidabschnitt des Speisedruckanschlusses 12. Somit ist die Stirnseite 9 des Führungsabschnittes 7 des Steuerkolbens 4 permanent mit dem Speisedruck aus dem Speisedruckanschluss 12 druckbeaufschlagt.

Um nunmehr den Ventilschieber 3 von der Öffnungsstellung in die Schließstellung zu überführen, wird der Vorsteuerventilanschluss 16 mittels des Vorsteuerventils druckentlastet, so dass die Steuerdruckkammer 5 entlüftet wird. Damit entfällt die Druckbeaufschlagung auf den Steuerkolben 4, so dass dieser durch die Druckbeauschlagung der Stirnseite 9 des Führungsabschnittes 7 in Richtung der Schließstellung bewegt wird. Da auch bei Übergang in die Schließstellung ein Druck am Speisedruckanschluss 12 weiterhin anliegt, liegt dieser Druck auch nach der Entlüftung der Steuerdruckkammer 5 noch an der Stirnseite 9 des Führungsabschnittes 7 an. Somit wird der Steuerkolben 4 sowie der Führungsabschnitt 7 beschleunigt zurückbewegt, so dass der Steuerkolben 4 sowie der Führungsabschnitt 7 in der Rückstellbewegung dem Ventilschieber 3 voreilen.

Insbesondere wird für die Rückführbewegung die Haftreibung des Kolbendichtelements 11 an der Wandung der Steuerdruckkammer 5 überwunden, so dass die Rückstellbewegung durch das Federelement 10 aufgrund der Reibung des Kolbendichtelements 11 nicht verlangsamt wird. Damit muss mittels des Druckfederelements 10 lediglich die Reibung der Schieberdichtung 17 überwunden werden, wobei ferner das Fluid aus der Steuerdruckkammer 5 herausgedrückt werden muss. Dennoch ergibt sich eine beschleunigte Schließbewegung des Ventilschiebers 3, da das Druckfederelement 10 die Kraftkomponente zur Rückstellung des Steuerkolbens 4 nicht aufbringen muss. Der Ventilschieber 3 bewegt sich so lange in Richtung der Schließstellung, bis die linksseitige Endfläche des Ventilschiebers 3 am Steuerkolben 4 angrenzt und durch diesen zum Stillstand gebracht wird. Bei erneuter Druckbeauschlagung der Steuerdruckkammer 5 durch den Vorsteuerventilanschluss 16 wird der Steuerkolben 4 zugleich mit dem Ventilschieber 2 in die Öffnungsstellung überführt, wobei hierbei der Ventilschieber 3 und der Steuerkolben 4 paarweise benachbart aneinander angrenzend verbleiben. Die angrenzende Anordnung des Steuerkolbens 4 an den Ventilschieber 3 wird erst wieder durch eine Entlüftung der Steuerdruckkammer 5 eingestellt.

Damit ist eine beschleunigte Schaltung des Druckmittelflusses von der Öffnungsstellung in die Schließstellung erzielbar, wobei ein Druckfederelement 10 einsetzbar ist, welches keine erhöhte Federrate aufweist, um eine Überführung des Ventilschiebers 3 von einer Schließstellung in eine Öffnungsstellung nicht unnötig zu verlangsamen. Mittels der in der vorliegenden Anmeldung vorgeschlagenen Anordnung wird der Fluiddruck des Speisedruckanschlusses 12 dazu genutzt, eine beschleunigte Rückstellbewegung des Ventilschiebers 3 und des Steuerkolbens 4 zu erzielen, ohne eine zusätzliche Druckbeaufschlagung des Ventilschiebers 3 von der der Steuerdruckkammer 5 gegenüberliegenden Seite zu benötigen und ohne die Federrate des Druckfederelements 10 unnötig zu erhöhen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Schieberventil
- 2: Gehäuse
- 3: Ventilschieber
- 4: Steuerkolben
- 5: Steuerdruckkammer
- 6: Druckkanal
- 7: Führungsabschnitt
- 8: Führungsbohrung
- 9: Stirnseite
- 10: Druckfederelement
- 11: Kolbendichtelement
- 12: Speisedruckanschluss
- 13: Arbeitsanschluss
- 14: Arbeitsanschluss
- 15: Entlüftungsanschluss
- 16: Vorsteuerventilanschluss
- 17: Schieberdichtung
- 18: Querbohrung

## Patentansprüche

1. Schieberventil (1) mit einem Gehäuse (2), welches zumindest zwei Fluidanschlüsse aufweist und einen Ventilschieber (3) mit einem endseitigen Steuerkolben (4) zum Schalten des Druckmittelflusses der Fluidanschlüsse axial beweglich aufnimmt, wobei der Steuerkolben (4) an eine Steuerdruckkammer (5) angrenzt, und der Ventilschieber (3) mittels einer Druckbeaufschlagung der Steuerdruckkammer (5) in eine Öffnungsstellung bewegbar ist,
**dadurch gekennzeichnet, dass** der Steuerkolben (4) relativ zum Ventilschieber (3) axial beweglich angeordnet ist und über die der Steuerdruckkammer (5) gegenüberliegenden Kolbenseite fluidisch beaufschlagbar ist, sodass der Steuerkolben (4) bei Druckentlastung der Steuerdruckkammer (5) in eine Schließstellung gegenüber dem Ventilschieber (3) voreilt.

2. Schieberventil (1) nach Anspruch 1,
**dadurch gekennzeichnet, dass** der Ventilschieber (3) einen Druckkanal (6) aufweist, welcher den wenigstens einen Fluidanschluss mit der der Steuerdruckkammer (5) gegenüberliegenden Seite des Steuerkolbens (4) fluidisch verbindet.

3. Schieberventil (1) nach Anspruch 1 oder 2,
**dadurch gekennzeichnet, dass** der Steuerkolben (4) einen Führungsabschnitt (7) umfasst, welcher in einer Führungsbohrung (8) des Ventilschiebers (3) axial geführt ist.

4. Schieberventil (1) nach Anspruch 3,
**dadurch gekennzeichnet, dass** die Druckbeaufschlagung der der Steuerdruckkammer (5) gegenüberliegenden Seite des Steuerkolbens (4) über die Stirnseite (9) des Führungsabschnittes (7) des Steuerkolbens (4) erfolgt.

5. Schieberventil (1) nach einem der vorgenannten Ansprüche,
**dadurch gekennzeichnet, dass** ein Druckfederelement (10) zwischen dem Gehäuse (2) und dem Ventilschieber (3) angeordnet ist, mittels dessen der Ventilschieber (3) in die Schließstellung bringbar ist.

6. Schieberventil (1) nach einem der vorgenannten Ansprüche,
**dadurch gekennzeichnet, dass** der Steuerkolben (4) ein Kolbendichtelement (11) aufweist, mittels welchem der Steuerkolben (4) gegenüber der Steuerdruckkammer (5) dynamisch abdichtet.

7. Schieberventil (1) nach Anspruch 6,
**dadurch gekennzeichnet, dass** die aus der Druckbeaufschlagung der Stirnseite (9) des Führungsabschnittes (7) resultierende Kraft zur Rückführung des Steuerkolbens (4) in die Schließstellung größer ist als die Reibung des Kolbendichtelementes (11).

8. Schieberventil (1) nach einem der vorgenannten Ansprüche,
**dadurch gekennzeichnet, dass** das Schieberventil (1) ein 3/2- Wegeventil oder ein 5/2- Wegeventil ist, und die Fluidanschlüsse wenigstens einen Speisedruckanschluss (12) und wenigstens einen Arbeitsanschluss (13) umfassen.

9. Schieberventil (1) nach Anspruch 8,
**dadurch gekennzeichnet, dass** die Stirnseite (9) des Führungsabschnittes (7) zur Druckbeaufschlagung über den Druckkanal (6) mit dem Speisedruckanschluss (12) fluidisch verbunden ist.

10. Verfahren zur Rückstellung eines Ventilschiebers (3) in einem Schieberventil (1) gemäß einem der Ansprüche 1 bis 9, wobei das Verfahren zumindest die folgenden Schritte aufweist:
- Entlüften der Steuerdruckkammer (5)
- Druckbeaufschlagen der der Steuerdruckkammer (5) gegenüberliegenden Seite des Steuerkolbens (4)
- Rückstellen des Steuerkolbens (4) in Richtung der Schließstellung des Ventilschiebers (3) durch die Druckbeaufschlagung
- Rückstellen des Ventilschiebers (3) durch ein Druckfederelement (10).

11. Verfahren nach Anspruch 10,
**dadurch gekennzeichnet, dass** die der Steuerdruckkammer (5) gegenüberliegende Seite des Steuerkolbens (4) durch einen Druckkanal (6) im Ventilschieber (3) mit dem Fluiddruck aus dem Speisedruckanschluss (12) druckbeaufschlagt wird.

12. Verfahren nach Anspruch 10 oder 11,
**dadurch gekennzeichnet, dass** der Steuerkolben (4) einen Führungsabschnitt (7) mit einer Stirnseite (9) aufweist, und der Führungsabschnitt (7) in einer Führungsbohrung (8) des Ventilschiebers (3) axial geführt wird, wobei die Stirnseite (9) des Führungsabschnittes (7) zur Erzeugung der Rückstellbewegung mit dem Fluiddruck aus dem Speisedruckanschluss (12) druckbeaufschlagt wird.
